# FASCICULE DE BREVET EUROPEEN

(11) **EP 3 031 732 B1**
(45) Date de publication et mention de la délivrance du brevet: **10.06.2020**
(21) Numéro de dépôt: 14307019.1
(22) Date de dépôt: 12.12.2014
(51) Int. Cl.: H01M 10/6563, H01M 10/625, B64D 33/08, B64D 27/24, B64D 33/10

(54) **Dispositif et procédé de refroidissement d'au moins une source d'alimentation électrique autonome d'un aéronef**
Vorrichtung und Verfahren zur Kühlung mindestens einer autonomen Stromversorgungsquelle eines Luftfahrzeugs
Device and method for cooling at least one autonomous power source of an aircraft

(43) Date de publication de la demande: 15.06.2016
(73) Titulaire: AIRBUS (SAS), 31700 Blagnac (FR)
(72) Inventeur: Joubert, Emmanuel, 92130 Issy Les Moulineaux (FR); Ferran, Benoit, 75012 Paris (FR); Sanitas, Antonin, 83201 Sollies-Pont (FR)
(74) Mandataire: Gicquel, Olivier Yves Gérard

(56) Documents cités:
- WO-A1-2009/080168
- DE-A1-102009 013 159
- DE-A1-102011 015 126
- DE-A1-102012 217 469

## Description

### Domaine de l'invention

La présente invention vise un dispositif et un procédé de refroidissement d'au moins une source d'alimentation électrique autonome d'un aéronef et un aéronef comportant un tel dispositif.

La présente invention s'applique au domaine de l'aéronautique. Plus particulièrement, la présente invention s'applique aux aéronefs électriques ou hybrides comportant des sources d'alimentation électriques autonomes.

### État de la technique

Les aéronefs à propulsion électrique ou hybride nécessitent des sources d'alimentation électriques autonomes embarquées. La durée de vie des sources d'alimentation électriques autonomes influence le coût d'exploitation de tels aéronefs. Le cyclage et les performances des sources d'alimentation électriques autonomes dépendent de différents facteurs, en particulier des températures d'opération pendant les phases de charge et de décharge. Dans le domaine de l'automobile, des systèmes de refroidissement de batteries à liquide sont principalement utilisés. Cependant, ces systèmes présentent l'inconvénient d'avoir une masse élevée et d'être difficilement adaptables à des aéronefs. De plus, les systèmes de refroidissement intègrent des ventilateurs mis en fonctionnement lors de la phase de recharge à l'arrêt du véhicule. Mais, le volume et la masse que représentent ces ventilateurs impactent l'autonomie du véhicule ce qui empêche l'adaptation d'un tel dispositif à un aéronef.

Finalement, les avions électriques et hybrides existant sont principalement des prototypes dont la grande majorité ne dispose pas de contrôle actif de la température des sources d'alimentation électriques autonomes. La plupart des prototypes sont dimensionnés pour que la température des batteries, qui est croissante au cours du vol, ne dépasse pas une valeur limite prédéterminée, sans qu'il y ait un échange actif de chaleur.

Le document DE10 2009 013159 décrit un radiateur comportant un corps de matrice comprenant des lamelles qui délimitent des canaux de réfrigérants traversés par un liquide de refroidissement.

### Objet de l'invention

La présente invention vise à remédier à tout ou partie de ces inconvénients. À cet effet, selon un premier aspect, la présente invention vise un dispositif de refroidissement d'au moins une source d'alimentation électrique autonome d'un aéronef selon la revendication 1.

L'avantage de l'invention est de commander la température d'au moins une source d'alimentation électrique autonome pendant la phase de charge et de décharge des batteries. Une source d'alimentation électrique autonome peut comporter plusieurs cellules. Pour une durée de vie et des performances optimales, les sources d'alimentation électriques autonomes doivent fonctionner entre quinze degrés Celsius et trente-cinq degrés Celsius et la différence de température entre deux cellules ne doit pas dépasser cinq degrés Celsius. Le dispositif objet de la présente invention permet de répondre à ces exigences et donc de diminuer le coût d'exploitation d'un aéronef comportant un tel dispositif.

De plus, la commande active des besoins de refroidissement par les moyens de supervision, et donc le déplacement des moyens mobiles de commande du débit d'air, permet une diminution de la trainée de refroidissement.

Dans des modes de réalisation, les besoins en refroidissement de la source d'alimentation électrique autonome sont transmis aux moyens de supervision par un BMS (acronyme de « Battery Management System » en terminologie anglo- saxonne).

Ces modes de réalisation présentent l'avantage d'utiliser des données représentatives de l'état des sources d'alimentation électriques autonomes en temps réel.

L'utilisation de l'air en tant que fluide de refroidissement présente l'avantage de minimiser la masse du dispositif. D'autant plus que, en vol, la vitesse de propulsion de l'avion permet d'acheminer l'air directement vers les batteries sans nécessiter un dispositif de ventilation complémentaire.

Dans des modes de réalisation, le dispositif objet de la présente invention comporte un échangeur de chaleur, un réservoir et une pompe et dans lequel le fluide est un liquide.

L'avantage de ces modes de réalisation est de permettre un refroidissement plus homogène des cellules d'au moins une source d'alimentation électrique autonome.

Dans des modes de réalisation, le dispositif objet de la présente invention est mis en place sous l'aile de l'aéronef.

Ces modes de réalisation présentent l'avantage de minimiser la trainée de refroidissement.

L'avantage de ces modes de réalisation est de pouvoir commander la température d'au moins une source d'alimentation électrique autonome en phase de charge afin d'optimiser la durée de vie et les performances d'au moins une source d'alimentation électrique autonome.

De plus, le dispositif de ventilation amovible est modulaire. Comme le dispositif de ventilation est mis en place lors des phases de recharge d'au moins une source d'alimentation électrique autonome au sol, le poids du dispositif de ventilation n'affecte pas les performances de l'aéronef en vol.

Aussi, la traçabilité, l'historique, le suivi et la maintenance de la source d'alimentation autonome sont améliorés.

Dans des modes de réalisation, le dispositif objet de la présente invention comporte des moyens de fixation du dispositif amovible de ventilation à l'aéronef. Ces modes de réalisation présentent l'avantage de permettre une fixation rapide du dispositif amovible de ventilation à l'aéronef afin d'effectuer une recharge rapide d'au moins une source d'alimentation électrique autonome. La recharge de la source d'alimentation électrique autonome est facilitée.

Selon un deuxième aspect, la présente invention vise un procédé de refroidissement d'au moins une source d'alimentation électrique autonome d'un aéronef comportant un dispositif objet de la présente invention selon la revendication 7.

Les avantages, buts et caractéristiques particuliers du procédé objet de la présente invention étant similaires à ceux du dispositif objet de la présente invention, ils ne sont pas rappelés ici.

Dans des modes de réalisation, le procédé objet de la présente invention comporte les étapes suivantes :
- fixation du dispositif amovible de ventilation sur l'aéronef,
- alimentation en courant électrique du dispositif amovible de ventilation et
- commande du débit d'air du dispositif de ventilation.
Selon un troisième aspect la présente invention vise un aéronef qui comporte un dispositif objet de la présente invention.

Les avantages, buts et caractéristiques particuliers de l'aéronef objet de la présente invention étant similaires à ceux du dispositif objet de la présente invention, ils ne sont pas rappelés ici.

### Brève description des figures

D'autres avantages, buts et caractéristiques particuliers de l'invention ressortiront de la description non-limitative qui suit d'au moins un mode de réalisation particulier d'un dispositif et d'un procédé de refroidissement d'au moins une source d'alimentation électrique autonome d'un aéronef et d'un aéronef comportant un tel dispositif, en regard des dessins annexés, dans lesquels :
- la figure 1 représente, schématiquement, un premier mode de réalisation particulier d'un dispositif objet de la présente invention,
- la figure 2 représente, schématiquement, un deuxième mode de réalisation particulier d'un dispositif objet de la présente invention,
- la figure 3 représente, schématiquement, un troisième mode de réalisation particulier d'un dispositif objet de la présente invention,
- la figure 4 représente, schématiquement, un quatrième mode de réalisation particulier d'un dispositif objet de la présente invention,
- la figure 5 représente, schématiquement, un premier mode de réalisation d'un dispositif de ventilation comporté par un dispositif objet de la présente invention
- la figure 6 représente, sous forme de logigramme, un premier mode de réalisation particulier d'un procédé objet de la présente invention,
- la figure 7 représente, sous forme de logigramme, un deuxième mode de réalisation particulier d'un dispositif objet de la présente invention et
- la figure 8 représente, schématiquement et en perspective, un mode de réalisation particulier d'un aéronef objet de la présente invention.

### Description d'exemples de réalisation de l'invention

On note dès à présent que les figures ne sont pas à l'échelle.

La présente description est donnée à titre non limitatif.

On note que le terme « un » est utilisé au sens « au moins un ».

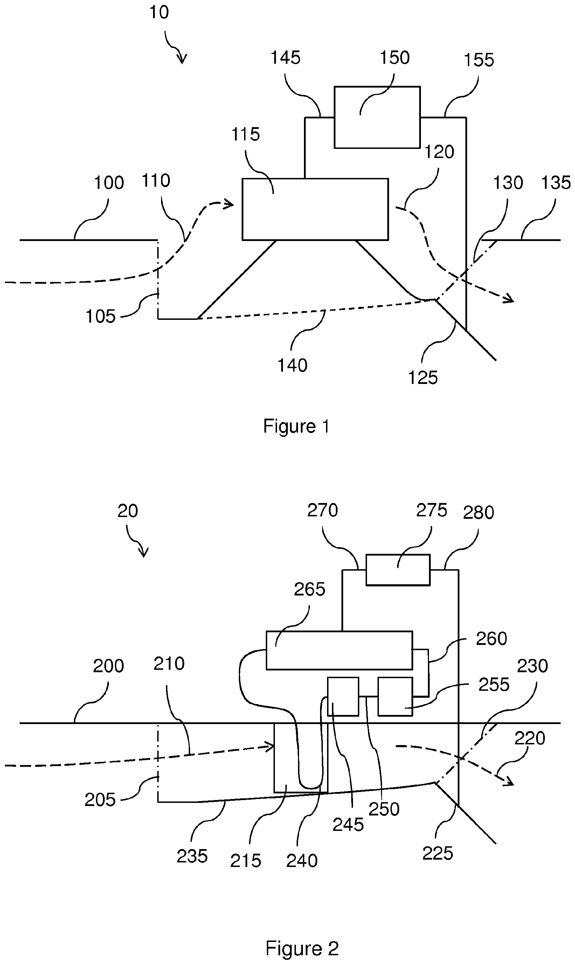

On observe sur la figure 1, un mode de réalisation particulier 10 d'un dispositif objet de la présente invention dans lequel le dispositif amovible n'est pas installé.

Le dispositif 10 de refroidissement d'au moins une source 115 d'alimentation électrique autonome d'un aéronef comporte :
- une entrée 105 d'air 110,
- l'air est acheminé vers au moins une source 115 d'alimentation électrique autonome de l'aéronef,
- une sortie 130 d'air chaud 120 convergente comportant des moyens mobiles 125 de commande du débit d'air 120 et
- des moyens 150 de supervision de l'aéronef pilotant les moyens mobiles 125 de commande du débit d'air 120 en fonction des besoins 145 en refroidissement de la source 115 d'alimentation électrique autonome.

Une structure, 100 et 135, de l'aéronef comporte le dispositif 10 de refroidissement. La structure, 100 et 135, est une aile de l'aéronef ou une partie centrale de l'aéronef, par exemple. Préférentiellement, la structure, 100 et 135, comportant le dispositif 10 de refroidissement est située sous l'aéronef.

Le dispositif 10 comporte une entrée 105 d'air 110. L'entrée 105 d'air 110 est une ouverture dans un carénage 140 de l'aéronef. Préférentiellement, l'entrée 105 d'air 110 est protégée par une grille limitant l'entrée de débris dans l'entrée 105 d'air.

L'air 110 agissant comme fluide de refroidissement est acheminé vers au moins une source 115 d'alimentation électrique autonome de l'aéronef.

Préférentiellement, la source 115 d'alimentation électrique autonome comporte au moins une batterie au Lithium-ion polymère de deux cent cinquante volts. Dans des modes de réalisation, la source 115 d'alimentation électrique autonome comporte au moins une batterie Lithium-souffre. Dans des modes de réalisation, la source 115 d'alimentation électrique autonome comporte au moins une batterie Lithium-air.

La source 115 d'alimentation électrique autonome comporte un BMS (acronyme de « Battery Management System » en terminologie anglo-saxonne). Le BMS contrôle les paramètres de la source 115 d'alimentation électrique autonome. Les paramètres contrôlés sont, le courant, l'état de charge et la température de la source 115 d'alimentation électrique autonome, par exemple.

La sortie 130 d'air chaud 120 convergente comporte des moyens mobiles 125 de commande du débit d'air 120. La sortie 130 d'air 120 chaud est préférentiellement un convergent accélérant l'air 120 et limitant la trainée. L'accélération de l'air 120 en sortie est proche de celle de l'écoulement sur le fuselage. Les moyens mobiles 125 de commande du débit d'air 120 sont un volet mobile et un actionneur du volet mobile. Dans des modes de réalisation, les moyens mobiles 125 de commande du débit d'air 120 comportent plusieurs volets mobiles et plusieurs actionneurs, un actionneur étant associé à un volet mobile. Chaque volet mobile correspond à une cellule de la source 115 d'alimentation électrique autonome.

Les moyens 150 de supervision de l'aéronef pilotent les moyens mobiles 125 de commande du débit d'air 120 en fonction des besoins 145 en refroidissement de la source 115 d'alimentation électrique autonome. Les besoins 145 en refroidissement de la source 115 d'alimentation électrique autonome sont transmis par le BMS aux moyens 150 de supervision de l'aéronef.

Préférentiellement, les moyens 150 de supervision de l'aéronef sont un superviseur aéronef. Un superviseur aéronef, commande chaque contrôleur de moteur, effectue de la gestion intelligente de fonctions sensibles de l'aéronef telles par exemple, la gestion de chaque source 115 d'alimentation électrique autonome, de chaque moteur, la mise en fonctionnement d'alarmes et la prédiction d'un besoin de maintenance. Préférentiellement, les moyens 150 de supervision sont un microprocesseur comportant un logiciel.

Préférentiellement le dispositif 10 est utilisé pour refroidir une source 115 d'alimentation électrique autonome en vol et donc en phase de décharge. La pression dynamique due à la vitesse relative de l'air sur un fuselage de l'aéronef est captée par l'entrée 105 d'air 110 et crée un débit d'air 110 à l'intérieur du carénage 140. Le rayon d'une lèvre d'entrée du carénage et le profil du carénage sont optimisés pour minimiser la trainée induite par le dispositif 10.

Les moyens 150 de supervision acquièrent au moyen du BMS, de la source 115 d'alimentation électrique autonome, les besoins 145 en refroidissement de la source 115 d'alimentation électrique autonome. Les moyens 150 de supervision envoient une commande 155 aux moyens 125 de commande du débit d'air 120. La commande 155 est une commande d'ouverture ou de fermeture des moyens 125 de commande du débit d'air 120, par exemple. La commande 155 du débit d'air 120 dépend de :
- la température extérieure captée par les moyens 150 de supervision,
- l'altitude de l'aéronef captée par les moyens 150 de supervision, l"altitude de l'aéronef impacte la densité de l'air et le débit massique de l'air, et
- la puissance nécessaire au vol et donc la puissance fournie par la source 115 d'alimentation électrique autonome.

La commande 155 du débit d'air 120 est :
- une commande d'ouverture du volet mobile des moyens 125 de commande du débit d'air 120 par l'actionneur si la température de la source 115 d'alimentation électrique autonome doit diminuer,
- une commande de fermeture du volet mobile des moyens 125 de commande du débit d'air 120 par l'actionneur si la température de la source 115 d'alimentation électrique autonome doit augmenter ou
- une commande de maintien en position du volet mobile des moyens 125 de commande du débit d'air 120 par l'actionneur si la température de la source 115 d'alimentation électrique autonome doit rester sensiblement inchangée.

En cas de besoin de chauffage de la source 115 d'alimentation électrique autonome, le volet mobile des moyens 125 de commande du débit d'air 120 est fermé. Le débit d'air 120 est donc sensiblement nul et le chauffage de la source 115 d'alimentation électrique autonome est effectué au moyen de l'énergie thermique produite par la source 115 d'alimentation électrique autonome se déchargeant. Une fois qu'une température optimale de la source 115 d'alimentation électrique autonome est atteinte, les moyens de supervision 150 commandent les moyens 125 de commande du débit d'air 120.

On observe sur la figure 2, un mode de réalisation particulier 20 d'un dispositif objet de la présente invention dans lequel le dispositif amovible n'est pas installé.

Le dispositif 20 de refroidissement d'au moins une source 265 d'alimentation électrique autonome d'un aéronef comporte :
- une entrée 205 d'air 210 refroidissant un fluide 240 de refroidissement,
- le fluide 240 de refroidissement est acheminé vers au moins une source 265 d'alimentation électrique autonome de l'aéronef,
- une sortie 330 d'air chaud 220 convergente comportant des moyens mobiles 225 de commande du débit d'air 220 et
- des moyens 275 de supervision de l'aéronef pilotant les moyens mobiles 225 de commande du débit d'air 220 en fonction des besoins 270 en refroidissement de la source 265 d'alimentation électrique autonome.

Une structure 200 de l'aéronef comporte le dispositif 20 de refroidissement. La structure 200 est une aile de l'aéronef ou une partie centrale de l'aéronef, par exemple. Préférentiellement, la structure, 200, comportant le dispositif 20 de refroidissement est située sous l'aéronef.

Le dispositif 20 comporte une entrée 205 d'air 210. L'entrée 205 d'air 210 est une ouverture dans un carénage 235 de l'aéronef. Préférentiellement, l'entrée 205 d'air 210 est protégée par une grille limitant l'entrée de débris dans l'entrée 205 d'air 210.

Le fluide 240 de refroidissement acheminé vers au moins une source 265 d'alimentation électrique autonome de l'aéronef est un liquide. Préférentiellement, le liquide est un liquide caloporteur tel un mélange d'eau et d'éthylène glycol. Le dispositif 20 comporte un réservoir 245 à fluide 240, une pompe 255 et un échangeur de chaleur 215.

Le fluide 240 est acheminé vers un réservoir 245. Le fluide 240 est prélevé du réservoir 245 à un débit 250 par une pompe 255. Le fluide 260 de débit 250 est acheminé à travers la source d'alimentation autonome. Un échange de chaleur est effectué, la source 265 d'alimentation électrique autonome est refroidie et le fluide 260 est réchauffé. Le fluide réchauffé 240 est acheminé vers un échangeur de chaleur 215. Dans l'échangeur de chaleur 215, le fluide 240 est refroidi en entrant en contact avec l'air 210. L'air chauffé 220 en sortie de l'échangeur de chaleur 215 s'achemine vers la sortie 230 d'air 220.

Préférentiellement, la source 265 d'alimentation électrique autonome comporte au moins une batterie au Lithium-ion polymère de deux cent cinquante volts. Dans des modes de réalisation, la source 265 d'alimentation électrique autonome comporte au moins une batterie Lithium-souffre. Dans des modes de réalisation, la source 265 d'alimentation électrique autonome comporte au moins une batterie Lithium-air.

La source 265 d'alimentation électrique autonome comporte un BMS (acronyme de « Battery Management System » en terminologie anglo-saxonne). Le BMS contrôle les paramètres de la source 265 d'alimentation électrique autonome. Les paramètres contrôlés sont, le courant, l'état de charge et la température de la source 265 d'alimentation électrique autonome, par exemple.

La sortie 230 d'air chaud 220 convergente comporte des moyens mobiles 225 de commande du débit d'air. La sortie 230 d'air chaud 220 est préférentiellement un convergent accélérant l'air 220 et limitant la trainée. L'accélération de l'air 220 en sortie est proche de celle de l'écoulement sur le fuselage. Les moyens mobiles 225 de commande du débit d'air 220 sont un volet mobile et un actionneur du volet mobile.

Les moyens 275 de supervision de l'aéronef pilotent les moyens mobiles 225 de commande du débit d'air 220 en fonction des besoins 270 en refroidissement de la source 265 d'alimentation électrique autonome. Les besoins 270 en refroidissement de la source 265 d'alimentation électrique autonome sont transmis par le BMS aux moyens 275 de supervision de l'aéronef.

Préférentiellement, les moyens 275 de supervision de l'aéronef sont un superviseur aéronef. Un superviseur aéronef, commande chaque contrôleur de moteur, effectue de la gestion intelligente de fonctions sensibles de l'aéronef telles par exemple, la gestion de chaque source 265 d'alimentation électrique autonome, de chaque moteur, la mise en fonctionnement d'alarmes et la prédiction d'un besoin de maintenance. Préférentiellement, les moyens 275 de supervision sont un microprocesseur comportant un logiciel.

Préférentiellement le dispositif 20 est utilisé pour refroidir une source 265 d'alimentation électrique autonome en vol et donc en phase de décharge. La pression dynamique due à la vitesse relative de l'air sur un fuselage de l'aéronef est captée par l'entrée d'air 205 et crée un débit d'air 210 à l'intérieur du carénage 235. Le rayon d'une lèvre d'entrée du carénage et le profil du carénage sont optimisés pour minimiser la trainée induite par le dispositif 20. Le refroidissement de la source 265 d'alimentation électrique autonome est effectué au moyen de l'échangeur de chaleur 215 comme décrit précédemment.

Les moyens 275 de supervision acquièrent au moyen du BMS, de la source 265 d'alimentation électrique autonome, les besoins 270 en refroidissement de la source 265 d'alimentation électrique autonome. Les moyens 275 de supervision envoient une commande 280 aux moyens 225 de commande du débit d'air 220. La commande 280 est une commande d'ouverture ou de fermeture des moyens 225 de commande du débit d'air 220, par exemple. La commande 280 du débit d'air 220 dépend de :
- la température extérieure captée par les moyens 275 de supervision,
- l'altitude de l'aéronef captée par les moyens 275 de supervision, l"altitude de l'aéronef impacte la densité de l'air et le débit massique de l'air, et
- la puissance nécessaire au vol et donc la puissance fournie par la source 265 d'alimentation électrique autonome.

La commande 280 du débit d'air est :
- une commande d'ouverture du volet mobile des moyens 225 de commande du débit d'air 220 par l'actionneur si la température de la source 265 d'alimentation électrique autonome doit diminuer,
- une commande de fermeture du volet mobile des moyens 225 de commande du débit d'air 220 par l'actionneur si la température de la source 265 d'alimentation électrique autonome doit augmenter ou
- une commande de maintien en position du volet mobile des moyens 225 de commande du débit d'air 220 par l'actionneur si la température de la source 265 d'alimentation électrique autonome doit rester sensiblement inchangée.

En cas de besoin de chauffage de la source 265 d'alimentation électrique autonome, le volet mobile des moyens 225 de commande du débit d'air 220 est fermé. Le débit d'air 220 est donc sensiblement nul et le chauffage de la source 265 d'alimentation électrique autonome est effectué au moyen de l'énergie thermique produite par la source 265 d'alimentation électrique autonome se déchargeant. Une fois qu'une température optimale de la source 265 d'alimentation électrique autonome est atteinte, les moyens de supervision 275 commandent les moyens 225 de commande du débit d'air 220.

Préférentiellement, simultanément à la fermeture du volet mobile des moyens 225 de commande du débit d'air 220, la pompe 255 est mise hors fonctionnement. Et, une fois qu'une température optimale de la source 265 d'alimentation électrique autonome est atteinte, les moyens de supervision 275 commandent la mise en fonctionnement de la pompe 255.

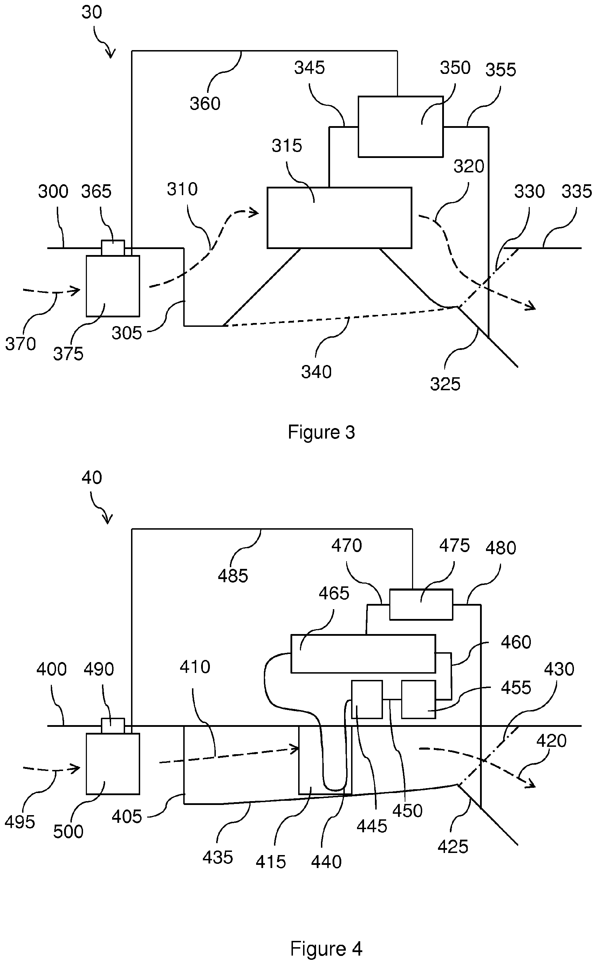

On observe sur la figure 3, un mode de réalisation particulier 30 d'un dispositif objet de la présente invention.

Le dispositif 30 de refroidissement d'au moins une source 315 d'alimentation électrique autonome d'un aéronef comporte :
- une entrée 305 d'air 310,
- l'air 310 est acheminé vers au moins une source 115 d'alimentation électrique autonome de l'aéronef,
- une sortie 330 d'air chaud 320 convergente comportant des moyens mobiles 325 de commande du débit d'air 320,
- des moyens 350 de supervision de l'aéronef pilotant les moyens mobiles 325 de commande du débit d'air 320 en fonction des besoins 345 en refroidissement de la source 315 d'alimentation électrique autonome et
- un dispositif 375 amovible de ventilation alimentant l'entrée 305 d'air et dont le débit d'air 310 est commandé par les moyens 350 de supervision de l'aéronef et qui comporte des moyens 365 de fixation du dispositif 375 amovible de ventilation.

Une structure, 300 et 335, de l'aéronef comporte le dispositif 30 de refroidissement. La structure, 300 et 335, est une aile de l'aéronef ou une partie centrale de l'aéronef, par exemple. Préférentiellement, la structure, 300 et 335, comportant le dispositif 30 de refroidissement est située sous l'aéronef.

Le dispositif 30 comporte une entrée 305 d'air 310. L'entrée 305 d'air 310 est une ouverture dans un carénage 340 de l'aéronef. Préférentiellement, l'entrée 305 d'air 310 est protégée par une grille limitant l'entrée de débris dans l'entrée 305 d'air 310. L'air 310 agissant comme fluide de refroidissement est acheminé vers au moins une source 315 d'alimentation électrique autonome de l'aéronef.

Le dispositif 375 amovible de ventilation alimentant l'entrée 305 d'air 310 et dont le débit d'air 310 est commandé par les moyens 350 de supervision de l'aéronef comporte des moyens 365 de fixation du dispositif 375 amovible de ventilation. Les moyens de fixation sont fixés à des moyens de fixation correspondant sur la structure, 300 et 335, de l'aéronef devant l'entrée d'air 305. Préférentiellement, le dispositif 375 amovible de ventilation comporte au moins un ventilateur. Dans des modes de réalisation, le dispositif 375 amovible de ventilation comporte au moins un compresseur d'air. Le dispositif 375 amovible de ventilation comporte des moyens d'alimentation en énergie électrique, tels une prise, par exemple.

Préférentiellement, la source 315 d'alimentation électrique autonome comporte au moins une batterie au Lithium-ion polymère de deux cent cinquante volts. Dans des modes de réalisation, la source 315 d'alimentation électrique autonome comporte au moins une batterie Lithium-souffre. Dans des modes de réalisation, la source 315 d'alimentation électrique autonome comporte au moins une batterie Lithium-air.

La source 315 d'alimentation électrique autonome comporte un BMS (acronyme de « Battery Management System » en terminologie anglo-saxonne). Le BMS contrôle les paramètres de la source 315 d'alimentation électrique autonome. Les paramètres contrôlés sont, le courant, l'état de charge et la température de la source 315 d'alimentation électrique autonome, par exemple.

La sortie 330 d'air chaud 320 convergente comporte des moyens mobiles 325 de commande du débit d'air 320. La sortie 330 d'air 320 chaud est préférentiellement un convergent accélérant l'air 320 et limitant la trainée lorsque l'aéronef est en vol. Les moyens mobiles 325 de commande du débit d'air 320 sont un volet mobile et un actionneur du volet mobile. Dans des modes de réalisation, les moyens mobiles 325 de commande du débit d'air 320 comportent plusieurs volets mobiles et plusieurs actionneurs, un actionneur étant associé à un volet mobile. Chaque volet mobile correspond à une cellule de la source 315 d'alimentation électrique autonome.

Les moyens 350 de supervision de l'aéronef pilotent les moyens mobiles 325 de commande du débit d'air 320 en fonction des besoins 345 en refroidissement de la source 315 d'alimentation électrique autonome. Les besoins 345 en refroidissement de la source 315 d'alimentation électrique autonome sont transmis par le BMS aux moyens 350 de supervision de l'aéronef.

Les moyens 350 de supervision de l'aéronef commandent le dispositif 375 de ventilation en fonction des besoins 370 en refroidissement de la source 465 d'alimentation électrique autonome. Les besoins 370 en refroidissement de la source 365 d'alimentation électrique autonome sont transmis par le BMS aux moyens 375 de supervision de l'aéronef.

Préférentiellement, les moyens 350 de supervision de l'aéronef sont un superviseur aéronef. Un superviseur aéronef, commande chaque contrôleur de moteur, effectue de la gestion intelligente de fonctions sensibles de l'aéronef telles par exemple, la gestion de chaque source 315 d'alimentation électrique autonome, de chaque moteur, la mise en fonctionnement d'alarmes et la prédiction d'un besoin de maintenance. Préférentiellement, les moyens 350 de supervision sont un microprocesseur comportant un logiciel.

Préférentiellement le dispositif 30 est utilisé pour refroidir une source 315 d'alimentation électrique autonome au sol et à l'arrêt, et donc en phase de charge. Le dispositif 375 de ventilation reçoit une commande 360, transmise par les moyens 350 de supervision, de débit d'air 310 en sortie du dispositif 375 de ventilation. L'air 370 est aspiré par le dispositif 375 de ventilation et accéléré. L'air 310 en sortie du dispositif 375 de ventilation est envoyé dans l'entrée 305 d'air 310 du dispositif 30 au débit commandé par les moyens 350 de supervision. Le dispositif 375 de ventilation crée un débit d'air 310 à l'intérieur du carénage 340.

Les moyens 350 de supervision acquièrent au moyen du BMS, de la source 315 d'alimentation électrique autonome, les besoins 345 en refroidissement de la source 315 d'alimentation électrique autonome. Les moyens 350 de supervision envoient une commande 360 au dispositif 375 de ventilation. La commande 360 est une commande d'accélération ou de ralentissement de la ventilation, par exemple. La commande 360 du débit d'air 310 dépend de :
- la température extérieure captée par les moyens 350 de supervision,
- l'altitude de l'aéronef captée par les moyens 350 de supervision, l"altitude de l'aéronef impacte la densité de l'air et le débit massique de l'air, et
- le temps de charge de la source 315 d'alimentation électrique autonome, et donc le temps d'immobilisation de l'aéronef.

La commande 360 du débit d'air 310 est :
- une commande d'accélération de la ventilation si la température de la source 315 d'alimentation électrique autonome doit diminuer,
- une commande de diminution de la ventilation si la température de la source 315 d'alimentation électrique autonome doit augmenter ou
- une commande de maintien de la vitesse de la ventilation si la température de la source 315 d'alimentation électrique autonome doit rester sensiblement inchangée.

En cas de besoin de chauffage de la source 315 d'alimentation électrique autonome, le dispositif 375 de ventilation est donc mis hors fonctionnement. Le débit d'air 310 est donc sensiblement nul et le chauffage de la source 315 d'alimentation électrique autonome est effectué au moyen de l'énergie thermique produite par la source 315 d'alimentation électrique autonome se déchargeant. Une fois qu'une température optimale de la source 315 d'alimentation électrique autonome est atteinte, les moyens de supervision 350 commandent le dispositif 375 de ventilation.

Les moyens 350 de supervision acquièrent au moyen du BMS, de la source 315 d'alimentation électrique autonome, les besoins 345 en refroidissement de la source 315 d'alimentation électrique autonome. Les moyens 350 de supervision envoient une commande 355 aux moyens 325 de commande du débit d'air 320. La commande 355 est une commande d'ouverture ou de fermeture des moyens 325 de commande du débit d'air 320, par exemple. La commande 355 du débit d'air 320 dépend de :
- la température extérieure captée par les moyens 350 de supervision,
- l'altitude de l'aéronef captée par les moyens 350 de supervision, l"altitude de l'aéronef impacte la densité de l'air et le débit massique de l'air, et
- le temps de charge de la source 315 d'alimentation électrique autonome, et donc le temps d'immobilisation de l'aéronef.

La commande 355 du débit d'air 320 est :
- une commande d'ouverture du volet mobile des moyens 325 de commande du débit d'air 320 par l'actionneur si la température de la source 315 d'alimentation électrique autonome doit diminuer,
- une commande de fermeture du volet mobile des moyens 325 de commande du débit d'air 320 par l'actionneur si la température de la source 315 d'alimentation électrique autonome doit augmenter ou
- une commande de maintien en position du volet mobile des moyens 325 de commande du débit d'air 320 par l'actionneur si la température de la source 315 d'alimentation électrique autonome doit rester sensiblement inchangée.

En cas de besoin de chauffage de la source 315 d'alimentation électrique autonome, le volet mobile des moyens 325 de commande du débit d'air 120 est fermé. Le débit d'air 320 est donc sensiblement nul et le chauffage de la source 315 d'alimentation électrique autonome est effectué au moyen de l'énergie thermique produite par la source 315 d'alimentation électrique autonome se déchargeant. Une fois qu'une température optimale de la source 315 d'alimentation électrique autonome est atteinte, les moyens de supervision 350 commandent les moyens 325 de commande du débit d'air 320.

Préférentiellement, les commandes 355 et 360 issues des moyens de supervision 350 se correspondent pour chaque besoin 345 en refroidissement de la source 315 d'alimentation électrique autonome.

On observe sur la figure 4, un mode de réalisation particulier 40 d'un dispositif objet de la présente invention.

Le dispositif 40 de refroidissement d'au moins une source 465 d'alimentation électrique autonome d'un aéronef comporte :
- une entrée 405 d'air 410 refroidissant un fluide 440 de refroidissement,
- le fluide 440 de refroidissement est acheminé vers au moins une source 265 d'alimentation électrique autonome de l'aéronef,
- une sortie 430 d'air chaud 420 convergente comportant des moyens mobiles 425 de commande du débit d'air 420,
- des moyens 475 de supervision de l'aéronef pilotant les moyens mobiles 425 de commande du débit d'air 420 en fonction des besoins 470 en refroidissement de la source 465 d'alimentation électrique autonome et
- un dispositif 500 amovible de ventilation alimentant l'entrée 405 d'air 410 et dont le débit d'air 410 est commandé par les moyens 475 de supervision de l'aéronef et qui comporte des moyens 490 de fixation du dispositif 500 amovible de ventilation.

Une structure, 400, de l'aéronef comporte le dispositif 40 de refroidissement. La structure, 400, est une aile de l'aéronef ou une partie centrale de l'aéronef, par exemple. Préférentiellement, la structure, 400, comportant le dispositif 40 de refroidissement est située sous l'aéronef.

Le dispositif 40 comporte une entrée 405 d'air 410. L'entrée 405 d'air 410 est une ouverture dans un carénage 435 de l'aéronef. Préférentiellement, l'entrée 405 d'air 410 est protégée par une grille limitant l'entrée de débris dans l'entrée 405 d'air 410.

Le fluide 440 de refroidissement acheminé vers au moins une source 465 d'alimentation électrique autonome de l'aéronef est un liquide. Préférentiellement, le liquide est un liquide caloporteur tel un mélange d'eau et d'éthylène glycol. Le dispositif 40 comporte un réservoir 445 à fluide 440, une pompe 455 et un échangeur de chaleur 415.

Le fluide 440 est acheminé vers un réservoir 445. Le fluide 440 est prélevé du réservoir 445 à un débit 450 par une pompe 455. Le fluide 460 de débit 455 est acheminé à travers la source d'alimentation autonome. Un échange de chaleur est effectué, la source 465 d'alimentation électrique autonome est refroidie et le fluide 460 est réchauffé. Le fluide réchauffé 440 est acheminé vers un échangeur de chaleur 415. Dans l'échangeur de chaleur 415, le fluide 440 est refroidi en entrant en contact avec l'air 410. L'air chauffé 420 en sortie de l'échangeur de chaleur 415 s'achemine vers la sortie 430 d'air 420.

Le dispositif 500 amovible de ventilation alimentant l'entrée 405 d'air et dont le débit d'air 410 est commandé par les moyens 475 de supervision de l'aéronef comporte des moyens 490 de fixation du dispositif 500 amovible de ventilation. Les moyens 490 de fixation sont fixés à des moyens de fixation correspondant sur la structure 400 de l'aéronef devant l'entrée d'air 405. Préférentiellement, le dispositif 500 amovible de ventilation comporte au moins un ventilateur. Dans des modes de réalisation, le dispositif 500 amovible de ventilation comporte au moins un compresseur d'air. Le dispositif 500 amovible de ventilation comporte des moyens d'alimentation en énergie électrique, tels une prise, par exemple.

Préférentiellement, la source 465 d'alimentation électrique autonome comporte au moins une batterie au Lithium-ion polymère de deux cent cinquante volts. Dans des modes de réalisation, la source 465 d'alimentation électrique autonome comporte au moins une batterie Lithium-souffre. Dans des modes de réalisation, la source 465 d'alimentation électrique autonome comporte au moins une batterie Lithium-air.

La source 465 d'alimentation électrique autonome comporte un BMS (acronyme de « Battery Management System » en terminologie anglo-saxonne). Le BMS contrôle les paramètres de la source 465 d'alimentation électrique autonome. Les paramètres contrôlés sont, le courant, l'état de charge et la température de la source 465 d'alimentation électrique autonome, par exemple.

La sortie 430 d'air chaud 420 convergente comporte des moyens mobiles 425 de commande du débit d'air. La sortie 430 d'air chaud 420 est préférentiellement un convergent accélérant l'air 420 et limitant la trainée lorsque l'aéronef est en vol. Les moyens mobiles 425 de commande du débit d'air 420 sont un volet mobile et un actionneur du volet mobile.

Les moyens 475 de supervision de l'aéronef pilotent les moyens mobiles 425 de commande du débit d'air 420 en fonction des besoins 470 en refroidissement de la source 465 d'alimentation électrique autonome. Les besoins 470 en refroidissement de la source 465 d'alimentation électrique autonome sont transmis par le BMS aux moyens 475 de supervision de l'aéronef.

Les moyens 475 de supervision de l'aéronef commandent le dispositif 500 de ventilation en fonction des besoins 470 en refroidissement de la source 465 d'alimentation électrique autonome. Les besoins 470 en refroidissement de la source 465 d'alimentation électrique autonome sont transmis par le BMS aux moyens 475 de supervision de l'aéronef.

Préférentiellement, les moyens 475 de supervision de l'aéronef sont un superviseur aéronef. Un superviseur aéronef, commande chaque contrôleur de moteur, effectue de la gestion intelligente de fonctions sensibles de l'aéronef telles par exemple, la gestion de chaque source 465 d'alimentation électrique autonome, de chaque moteur, la mise en fonctionnement d'alarmes et la prédiction d'un besoin de maintenance. Préférentiellement, les moyens 470 de supervision sont un microprocesseur comportant un logiciel.

Préférentiellement le dispositif 40 est utilisé pour refroidir une source 465 d'alimentation électrique autonome au sol et à l'arrêt, et donc en phase de charge. Le dispositif 500 de ventilation reçoit une commande 485 de débit d'air 410 en sortie du dispositif 500 de ventilation. L'air 495 est aspiré par le dispositif 500 de ventilation et accéléré. L'air 410 en sortie du dispositif 500 de ventilation est envoyé dans l'entrée 405 d'air du dispositif 40 au débit commandé par les moyens 475 de supervision. Le dispositif 500 de ventilation crée un débit d'air 410 à l'intérieur du carénage 435. Le rayon d'une lèvre d'entrée du carénage 435 et le profil du carénage 435 sont optimisés pour minimiser la trainée induite par le dispositif 40.

Les moyens 475 de supervision acquièrent au moyen du BMS, de la source 465 d'alimentation électrique autonome, les besoins 470 en refroidissement de la source 465 d'alimentation électrique autonome. Les moyens 475 de supervision envoient une commande 485 au dispositif 500 de ventilation. La commande 485 est une commande d'accélération ou de ralentissement de la ventilation, par exemple. La commande 485 du débit d'air 410 dépend de :
- la température extérieure captée par les moyens 475 de supervision,
- l'altitude de l'aéronef captée par les moyens 475 de supervision, l"altitude de l'aéronef impacte la densité de l'air et le débit massique de l'air, et
- le temps de charge de la source 465 d'alimentation électrique autonome, et donc le temps d'immobilisation de l'aéronef.

La commande 485 du débit d'air 410 est :
- une commande d'accélération de la ventilation si la température de la source 465 d'alimentation électrique autonome doit diminuer,
- une commande de diminution de la ventilation si la température de la source 465 d'alimentation électrique autonome doit augmenter ou
- une commande de maintien de la vitesse de la ventilation si la température de la source 465 d'alimentation électrique autonome doit rester sensiblement inchangée.

En cas de besoin de chauffage de la source 465 d'alimentation électrique autonome, le dispositif 500 de ventilation est donc mis hors fonctionnement. Le débit d'air 410 est donc sensiblement nul et le chauffage de la source 465 d'alimentation électrique autonome est effectué au moyen de l'énergie thermique produite par la source 465 d'alimentation électrique autonome se déchargeant. Une fois qu'une température optimale de la source 465 d'alimentation électrique autonome est atteinte, les moyens de supervision 475 commandent le dispositif 500 de ventilation.

Les moyens 475 de supervision acquièrent au moyen du BMS, de la source 465 d'alimentation électrique autonome, les besoins 470 en refroidissement de la source 465 d'alimentation électrique autonome. Les moyens 475 de supervision envoient une commande 480 aux moyens 425 de commande du débit d'air 420. La commande 480 est une commande d'ouverture ou de fermeture des moyens 425 de commande du débit d'air 420, par exemple. La commande 480 du débit d'air 420 dépend de :
- la température extérieure captée par les moyens 475 de supervision,
- l'altitude de l'aéronef captée par les moyens 475 de supervision, l"altitude de l'aéronef impacte la densité de l'air et le débit massique de l'air, et
- la puissance nécessaire au vol et donc la puissance fournie par la source 465 d'alimentation électrique autonome.

La commande 480 du débit d'air est :
- une commande d'ouverture du volet mobile des moyens 425 de commande du débit d'air 420 par l'actionneur si la température de la source 465 d'alimentation électrique autonome doit diminuer,
- une commande de fermeture du volet mobile des moyens 425 de commande du débit d'air 420 par l'actionneur si la température de la source 465 d'alimentation électrique autonome doit augmenter ou
- une commande de maintien en position du volet mobile des moyens 425 de commande du débit d'air 420 par l'actionneur si la température de la source 465 d'alimentation électrique autonome doit rester sensiblement inchangée.

En cas de besoin de chauffage de la source 465 d'alimentation électrique autonome, le volet mobile des moyens 425 de commande du débit d'air 420 est fermé. Le débit d'air 420 est donc sensiblement nul et le chauffage de la source 465 d'alimentation électrique autonome est effectué au moyen de l'énergie thermique produite par la source 465 d'alimentation électrique autonome se déchargeant. Une fois qu'une température optimale de la source 465 d'alimentation électrique autonome est atteinte, les moyens de supervision 475 commandent les moyens 425 de commande du débit d'air 420.

Préférentiellement, simultanément à la fermeture du volet mobile des moyens 425 de commande du débit d'air 420, la pompe 455 est mise hors fonctionnement. Et, une fois qu'une température optimale de la source 465 d'alimentation électrique autonome est atteinte, les moyens de supervision 475 commandent la mise en fonctionnement de la pompe 455.

Préférentiellement, les commandes 480 et 485 issues des moyens de supervision 475 se correspondent pour chaque besoin 470 en refroidissement de la source 465 d'alimentation électrique autonome.

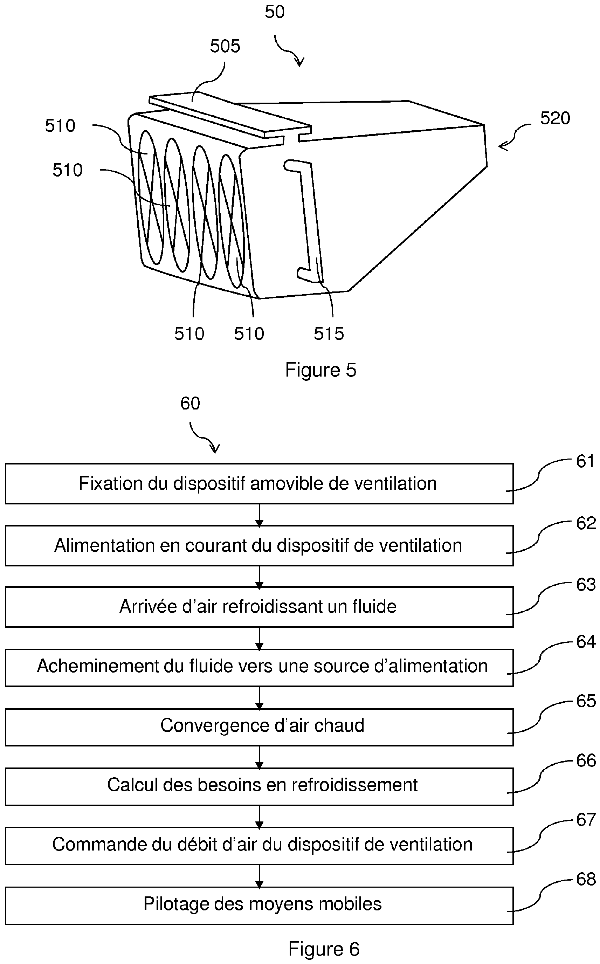

On observe sur la figure 5, un mode de réalisation particulier 50 d'un dispositif de ventilation compris dans un dispositif de refroidissement objet de la présente invention.

Préférentiellement, les dispositifs, 375 et 500, de ventilation, décrits aux figures 3 et 4, sont le mode de réalisation 50 du dispositif de ventilation.

Le dispositif 50 de ventilation comporte des moyens de fixation 505 du dispositif 50 de ventilation à l'aéronef. Les moyens de fixation 505 sont des clips ou des crochets, par exemple. Préférentiellement, les moyens de fixation 505 sont configurés pour qu'un utilisateur fixe rapidement et sans encombre le dispositif 50 de ventilation à l'aéronef qui comporte des moyens de fixation correspondants.

Le dispositif 50 de ventilation comporte au moins un ventilateur 510. Préférentiellement, le dispositif 50 de ventilation comporte quatre ventilateurs 510. Dans des modes de réalisation, le dispositif 50 de ventilation comporte au moins un compresseur d'air.

Le dispositif 50 de ventilation comporte au moins une poignée de manutention 515. Préférentiellement, le dispositif 50 de ventilation comporte deux poignées 515 de manutention placées sensiblement symétriquement.

Le dispositif 50 de ventilation comporte une sortie 520 d'air. L'air sortant de la sortie 520 d'air à un débit commandé par des moyens de supervision de l'aéronef.

Le dispositif 50 amovible de ventilation comporte des moyens d'alimentation en énergie électrique, tels une prise, par exemple.

On observe sur la figure 6, un mode de réalisation particulier d'un procédé 60 de refroidissement objet de la présente invention.

Le procédé 60 de refroidissement d'au moins une source, 315 ou 465, d'alimentation électrique autonome d'un aéronef comportant un dispositif, 30 ou 40, comporte les étapes suivantes :
- fixation 61 du dispositif, 375, 500 ou 50, amovible de ventilation sur l'aéronef,
- alimentation 62 en courant électrique du dispositif, 375, 500 ou 50, amovible de ventilation,
- arrivée 63 d'air, 310 ou 410, refroidissant un fluide, 310 ou 440, de refroidissement par l'entrée d'air, 305 ou 405
- acheminement 64 du fluide, 310 ou 440, de refroidissement vers au moins une source, 315 ou 465, d'alimentation électrique autonome de l'aéronef,
- convergence 65 d'air chaud, 320 ou 420, en sortie,
- calcul 66 des besoins, 345 ou 470, en refroidissement de la source, 315 ou 465, d'alimentation électrique autonome par des moyens, 350 ou 475, de supervision de l'aéronef,
- commande 67 du débit d'air, 310 ou 410, du dispositif, 375 ou 500, de ventilation et
- pilotage 68 des moyens, 325 ou 425, mobiles de commande du débit d'air, 320 ou 420.

Préférentiellement, le procédé 60 est mis en œuvre par un mode de réalisation 30 ou 40 du dispositif objet de la présente invention.

Le dispositif, 375, 500 ou 50, amovible de ventilation sur l'aéronef est fixé à l'étape 61 de fixation à l'aéronef par un utilisateur. La fixation 61 est réalisée au moyen des moyens de fixation 365 ou 490.

Une fois le dispositif, 375, 500 ou 50, de ventilation fixé à l'aéronef, un utilisateur procède au raccordement de moyens d'alimentation en énergie électrique comportés par le dispositif, 375, 500 ou 50, à un réseau électrique. L'étape d'alimentation 62 en courant électrique du dispositif, 375, 500 ou 50, amovible de ventilation est alors réalisée.

Le dispositif, 375, 500 ou 50, de ventilation est mis en fonctionnement et met en œuvre l'étape arrivée 63 d'air, 310 ou 410, refroidissant un fluide, 310 ou 440, de refroidissement par l'entrée d'air, 305 ou 405. L'arrivée 63 d'air, 310 ou 410, est réalisée par la mise en fonctionnement de la ventilation créée par le dispositif, 375, 500 ou 50, de ventilation.

L'acheminement 64 du fluide, 310 ou 440, de refroidissement vers au moins une source, 315 ou 465, d'alimentation électrique autonome de l'aéronef est réalisé automatique au moyen du débit d'air, 310 ou 410, créé.

La convergence 65 d'air chaud, 320 ou 420, en sortie du dispositif, 30 ou 40, de refroidissement est mise en œuvre automatiquement par la sortie, 330 ou 430 d'air.

L'étape calcul 66 des besoins, 345 ou 470, en refroidissement de la source, 315 ou 465, d'alimentation électrique autonome par des moyens, 350 ou 475, de supervision de l'aéronef est réalisée au moyen du BMS de la source, 315 ou 465, d'alimentation en énergie électrique autonome. Le BMS contrôle les paramètres de la source, 315 ou 465, d'alimentation électrique autonome. Les paramètres contrôlés sont, le courant, l'état de charge et la température de la source, 315 ou 465, d'alimentation électrique autonome, par exemple.

Préférentiellement, le procédé 60 est mis en œuvre lors d'une recharge de la source, 315 ou 465, d'alimentation électrique autonome de l'aéronef lorsque l'aéronef est au sol et à l'arrêt.

L'étape de commande 67 du débit d'air, 310 ou 410, du dispositif, 375 ou 500, de ventilation est réalisée selon les modes de réalisation suivants.

Les moyens, 350 ou 475, de supervision acquièrent au moyen du BMS, de la source, 315 ou 465, d'alimentation électrique autonome, les besoins, 345 ou 470, en refroidissement de la source, 315 ou 465, d'alimentation électrique autonome. Les moyens, 350 ou 475, de supervision envoient une commande, 360 ou 485, au dispositif, 375, 500 ou 50, de ventilation. La commande, 360 ou 485, est une commande d'accélération ou de ralentissement de la ventilation, par exemple. La commande, 360 ou 485, du débit d'air, 310 ou 410, dépend de :
- la température extérieure captée par les moyens, 350 ou 475, de supervision,
- l'altitude de l'aéronef captée par les moyens, 350 ou 475, de supervision, l"altitude de l'aéronef impacte la densité de l'air et le débit massique de l'air, et
- le temps de charge de la source, 315 ou 465, d'alimentation électrique autonome, et donc le temps d'immobilisation de l'aéronef.

La commande, 360 ou 485, du débit d'air, 310 ou 410, est :
- une commande d'accélération de la ventilation si la température de la source, 315 ou 465, d'alimentation électrique autonome doit diminuer,
- une commande de diminution de la ventilation si la température de la source, 315 ou 465, d'alimentation électrique autonome doit augmenter ou
- une commande de maintien de la vitesse de la ventilation si la température de la source, 315 ou 465, d'alimentation électrique autonome doit rester sensiblement inchangée.

En cas de besoin de chauffage de la source, 315 ou 465, d'alimentation électrique autonome, le dispositif, 375, 500 ou 50, de ventilation est donc mis hors fonctionnement. Le débit d'air, 310 ou 410, est donc sensiblement nul et le chauffage de la source, 315 ou 465, d'alimentation électrique autonome est effectué au moyen de l'énergie thermique produite par la source, 315 ou 465, d'alimentation électrique autonome se chargeant. Une fois qu'une température optimale de la source, 315 ou 465, d'alimentation électrique autonome est atteinte, les moyens de supervision, 350 ou 475, commandent le dispositif, 375, 500 ou 50, de ventilation.

L'étape de pilotage 68 des moyens, 325 ou 425, mobiles de commande du débit d'air, 320 ou 420, est réalisée selon les modes de réalisation suivants.

Les moyens, 350 ou 375, de supervision acquièrent au moyen du BMS, de la source, 315 ou 465, d'alimentation électrique autonome, les besoins, 345 ou 470, en refroidissement de la source, 315 ou 465, d'alimentation électrique autonome. Les moyens, 350 ou 475, de supervision envoient une commande, 355 ou 480, aux moyens, 325 ou 425, de commande du débit d'air, 320 ou 420. La commande, 355 ou 480, est une commande d'ouverture ou de fermeture des moyens, 325 ou 425, de commande du débit d'air, 320 ou 420, par exemple. La commande, 355 ou 480, du débit d'air, 320 ou 420 dépend de :
- la température extérieure captée par les moyens, 350 ou 475, de supervision,
- l'altitude de l'aéronef captée par les moyens, 350 ou 475, de supervision, l"altitude de l'aéronef impacte la densité de l'air et le débit massique de l'air, et
- le temps de charge de la source, 315 ou 465, d'alimentation électrique autonome, et donc le temps d'immobilisation de l'aéronef.

La commande, 355 ou 480, du débit d'air, 320 ou 420, est :
- une commande d'ouverture du volet mobile des moyens, 325 ou 425, de commande du débit d'air, 320 ou 420, par l'actionneur si la température de la source, 315 ou 465, d'alimentation électrique autonome doit diminuer,
- une commande de fermeture du volet mobile des moyens, 325 ou 425, de commande du débit d'air, 320 ou 420, par l'actionneur si la température de la source, 315 ou 465, d'alimentation électrique autonome doit augmenter ou
- une commande de maintien en position du volet mobile des moyens, 325 ou 425, de commande du débit d'air, 320 ou 420, par l'actionneur si la température de la source, 315 ou 465, d'alimentation électrique autonome doit rester sensiblement inchangée.

En cas de besoin de chauffage de la source, 315 ou 465, d'alimentation électrique autonome, le volet mobile des moyens, 325 ou 425, de commande du débit d'air, 320 ou 420, est fermé. Le débit d'air, 320 ou 420, est donc sensiblement nul et le chauffage de la source, 315 ou 465, d'alimentation électrique autonome est effectué au moyen de l'énergie thermique produite par la source, 315 ou 465, d'alimentation électrique autonome se chargeant. Une fois qu'une température optimale de la source, 315 ou 465, d'alimentation électrique autonome est atteinte, les moyens de supervision, 350 ou 475, commandent les moyens, 325 ou 425, de commande du débit d'air, 320 ou 420.

Préférentiellement, les commandes, 355 et 360, ou 480 et 485, issues des moyens de supervision, 350 ou 475, se correspondent pour chaque besoin, 345 ou 470, en refroidissement de la source, 315 ou 465, d'alimentation électrique autonome.

Les étapes d'arrivée 63, d'acheminement 64, de convergence 65, de calcul 66, de commande 67 et de pilotage 68, sont réitérés jusqu'à la fin de la phase de charge de la source, 315 ou 465, d'alimentation électrique autonome de l'aéronef.

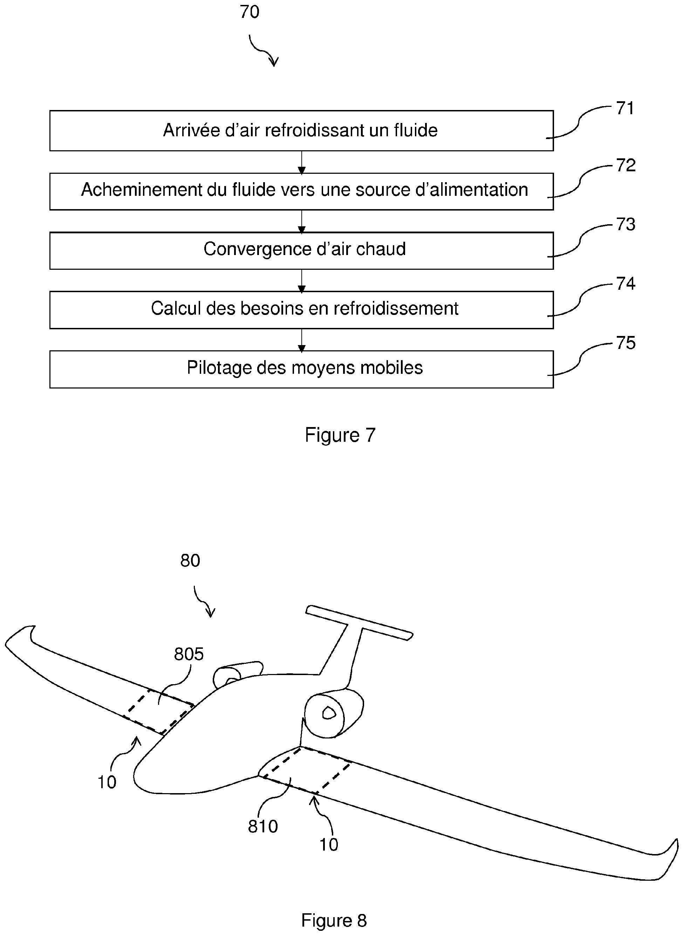

On observe sur la figure 7, un mode de réalisation particulier d'un procédé 70 de refroidissement objet de la présente invention.

Le procédé 70 de refroidissement d'au moins une source, 115 ou 265, d'alimentation électrique autonome d'un aéronef comportant un dispositif, 10 ou 20, comporte les étapes suivantes :
- arrivée 71 d'air, 110 ou 210, refroidissant un fluide, 110 ou 240, de refroidissement par l'entrée d'air, 105 ou 205
- acheminement 72 du fluide, 110 ou 240, de refroidissement vers au moins une source, 115 ou 265, d'alimentation électrique autonome de l'aéronef,
- convergence 73 d'air chaud, 120 ou 220, en sortie,
- calcul 74 des besoins, 145 ou 270, en refroidissement de la source, 115 ou 4265, d'alimentation électrique autonome par des moyens, 150 ou 375, de supervision de l'aéronef,
- pilotage 75 des moyens, 125 ou 225, mobiles de commande du débit d'air, 120 ou 220.

Préférentiellement, le procédé 70 est mis en œuvre par un mode de réalisation, 10 ou 20, du dispositif objet de la présente invention.

L'arrivée 71 d'air, 110 ou 210, est réalisée par la pression dynamique due à la vitesse relative de l'air sur un fuselage de l'aéronef qui est captée par l'entrée, 105 ou 205, d'air et qui crée un débit d'air, 110 ou 210, à l'intérieur du carénage, 140 ou 240.

L'acheminement 72 du fluide, 110 ou 240, de refroidissement vers au moins une source, 115 ou 265, d'alimentation électrique autonome de l'aéronef est réalisé automatique au moyen du débit d'air, 110 ou 210, créé.

La convergence 73 d'air chaud, 120 ou 220, en sortie du dispositif, 10 ou 20, de refroidissement est mise en œuvre par la sortie, 130 ou 230, d'air, 120 ou 220.

L'étape calcul 74 des besoins, 145 ou 270, en refroidissement de la source, 115 ou 265, d'alimentation électrique autonome par des moyens, 150 ou 275, de supervision de l'aéronef est réalisée au moyen du BMS de la source, 115 ou 265, d'alimentation en énergie électrique autonome. Le BMS contrôle les paramètres de la source, 115 ou 265, d'alimentation électrique autonome. Les paramètres contrôlés sont, le courant, l'état de charge et la température de la source, 115 ou 265, d'alimentation électrique autonome, par exemple.

Préférentiellement, le procédé 70 est mis en œuvre lors d'une décharge de la source, 115 et 265, d'alimentation électrique autonome de l'aéronef lorsque l'aéronef est en vol.

L'étape de pilotage 75 des moyens, 125 ou 225, mobiles de commande du débit d'air, 120 ou 220, est réalisée conformément aux modes de réalisation suivants.

Les moyens, 150 ou 275, de supervision acquièrent au moyen du BMS, de la source, 115 ou 265, d'alimentation électrique autonome, les besoins, 145 ou 270, en refroidissement de la source, 115 ou 265, d'alimentation électrique autonome. Les moyens, 150 ou 275, de supervision envoient une commande, 155 ou 280, aux moyens, 125 ou 225, de commande du débit d'air, 120 ou 220. La commande, 155 ou 280, est une commande d'ouverture ou de fermeture des moyens, 125 ou 225, de commande du débit d'air, 120 ou 220, par exemple. La commande, 155 ou 280, du débit d'air, 120 ou 220 dépend de :
- la température extérieure captée par les moyens, 150 ou 275, de supervision,
- l'altitude de l'aéronef captée par les moyens, 150 ou 275, de supervision, l"altitude de l'aéronef impacte la densité de l'air et le débit massique de l'air, et
- la puissance nécessaire au vol et donc la puissance fournie par la source, 115 ou 265, d'alimentation électrique autonome.

La commande, 155 ou 280, du débit d'air, 120 ou 220, est :
- une commande d'ouverture du volet mobile des moyens, 125 ou 225, de commande du débit d'air, 120 ou 220, par l'actionneur si la température de la source, 115 ou 265, d'alimentation électrique autonome doit diminuer,
- une commande de fermeture du volet mobile des moyens, 125 ou 225, de commande du débit d'air, 120 ou 220, par l'actionneur si la température de la source, 115 ou 265, d'alimentation électrique autonome doit augmenter ou
- une commande de maintien en position du volet mobile des moyens, 125 ou 225, de commande du débit d'air, 120 ou 220, par l'actionneur si la température de la source, 115 ou 265, d'alimentation électrique autonome doit rester sensiblement inchangée.

En cas de besoin de chauffage de la source, 115 ou 265, d'alimentation électrique autonome, le volet mobile des moyens, 125 ou 225, de commande du débit d'air, 120 ou 220, est fermé. Le débit d'air, 120 ou 220, est donc sensiblement nul et le chauffage de la source, 115 ou 265, d'alimentation électrique autonome est effectuée au moyen de l'énergie thermique produite par la source, 115 ou 265, d'alimentation électrique autonome se déchargeant. Une fois qu'une température optimale de la source, 115 ou 265, d'alimentation électrique autonome est atteinte, les moyens de supervision, 150 ou 275, commandent les moyens, 125 ou 225, de commande du débit d'air, 120 ou 220.

Les étapes d'arrivée 71, d'acheminement 72, de convergence 73, de calcul 74 et de pilotage 75, sont réitérés jusqu'à la fin de la phase de décharge de la source, 115 ou 265, d'alimentation électrique autonome de l'aéronef.

On observe sur la figure 8, un mode de réalisation particulier d'un aéronef 80 objet de la présente invention.

L'aéronef 80 comporte deux ailes.

L'aéronef 80 comporte au moins deux sources, 805 et 810, d'alimentation électrique autonomes. Préférentiellement, les sources, 805 et 810, d'alimentation électrique autonomes sont comportés dans les ailes de l'aéronef 80.

Chaque source, 805 et 810, d'alimentation électrique autonome est refroidie par une mode de réalisation, 10 ou 20, du dispositif objet de la présente invention en phase de vol, et donc de décharge des sources, 805 et 810 d'alimentation électrique autonome. Chaque source, 805 et 810, d'alimentation électrique autonome est refroidie par une mode de réalisation, 30 ou 40, du dispositif objet de la présente invention au sol et à l'arrêt, et donc en phase de recharge des sources, 805 et 810 d'alimentation électrique autonome.

Préférentiellement, l'aéronef 80 comporte des moyens de fixation correspondant à des moyens, 365, 490 ou 505, de fixation d'un dispositif, 375, 500 ou 50, amovible de ventilation.

## Revendications

1. Dispositif (30, 40) de refroidissement d'au moins une source (315, 465) d'alimentation électrique autonome d'un aéronef (80) comportant :
- ladite au moins une source (315, 465) d'alimentation électrique autonome d'un aéronef,
- une entrée (305, 405) d'air (310, 410) acheminant l'air arrivant par l'entrée d'air vers ladite au moins une source (315, 465) d'alimentation électrique autonome d'un l'aéronef; ou une entrée d'air et un circuit de refroidissement comportant un fluide de refroidissement, l'entrée d'air permettant à l'air de refroidir ledit fluide de refroidissement, lequel est acheminé vers ladite au moins une source d'alimentation électrique d'un aéronef,
- une sortie (330, 430), d'air chaud (320, 420) convergente comportant des moyens (325, 425) mobiles de commande du débit d'air et
- des moyens (350, 475) de supervision de l'aéronef pilotant les moyens mobiles de commande du débit d'air en fonction des besoins (345, 475) en refroidissement de la source d'alimentation électrique autonome,
**caractérisé en ce qu'**il comporte un dispositif (375, 500, 50) amovible de ventilation alimentant l'entrée (305, 405) d'air (310, 410) et **en ce que** les moyens (350, 475) de supervision de l'aéronef sont configurés pour commander le débit d'air du dispositif (375, 500, 50) amovible de ventilation.

2. Dispositif (30, 40) selon la revendication 1, dans lequel les besoins (345, 470) en refroidissement de la source (315, 465) d'alimentation électrique autonome sont transmis aux moyens (350, 475) de supervision par un système de gestion de batterie ou BMS.

3. Dispositif (40) selon l'une des revendications 1 ou 2, qui comporte, outre le circuit de refroidissement, un échangeur (415) de chaleur, un réservoir (445) dudit fluide (440) et une pompe (455) et dans lequel le fluide (440) est un liquide.

4. Dispositif (30, 40) selon l'une des revendications 1 à 3 qui comporte des moyens (365, 490) de fixation du dispositif (375, 500) amovible de ventilation à l'aéronef (80).

5. Aéronef (80) **caractérisé en ce qu'**il comporte un dispositif (30, 40) selon l'une des revendications 1 à 4.

6. Aéronef comportant au moins une aile et dispositif (30, 40) selon l'une des revendications 1 à 4 qui est mis en place sous l'aile de l'aéronef (80).

7. Procédé (60) de refroidissement d'au moins une source (315, 475) d'alimentation électrique autonome d'un aéronef (80) comportant un dispositif (30, 40) selon l'une des revendications 1 à 4, **caractérisé en ce qu'**il comporte les étapes suivantes :
- arrivée (63) d'air (310, 410) par l'entrée (305, 405) d'air,
- acheminement (64) d'air ou du fluide de refroidissement vers l'au moins une source d'alimentation électrique autonome de l'aéronef,
- convergence (65) d'air chaud (320, 420) en sortie,
- calcul (66) des besoins (345, 470) en refroidissement de la source d'alimentation électrique autonome par des moyens (350, 475) de supervision de l'aéronef et
- pilotage (68) des moyens (325, 425) mobiles de commande du débit d'air.

8. Procédé (60) de refroidissement selon la revendication 7, qui comporte, en outre, les étapes suivantes :
- fixation (61) du dispositif (375, 500, 50) amovible de ventilation sur l'aéronef (80),
- alimentation (62) en courant électrique du dispositif amovible de ventilation et
- commande (67) du débit d'air (310, 410) du dispositif de ventilation.

## Patentansprüche

1. Vorrichtung (30, 40) zur Kühlung mindestens einer autonomen Stromversorgungsquelle (315, 465) eines Luftfahrzeugs (80), welche umfasst:
- die mindestens eine autonome Stromversorgungsquelle (315, 465) eines Luftfahrzeugs,
- einen Einlass (305, 405) für Luft (310, 410), der die durch den Lufteinlass eintretende Luft zu der mindestens einen autonomen Stromversorgungsquelle (315, 465) eines Luftfahrzeugs leitet; oder einen Lufteinlass und einen Kühlkreislauf, der ein Kühlfluid umfasst, wobei der Lufteinlass ermöglicht, dass die Luft das Kühlfluid kühlt, welches zu der mindestens einen Stromversorgungsquelle eines Luftfahrzeugs geleitet wird,
- einen sich verjüngenden Auslass (330, 430) für Heißluft (320, 420), der bewegliche Mittel (325, 425) zur Steuerung des Luftdurchsatzes umfasst, und
- Mittel (350, 475) zur Überwachung des Luftfahrzeugs, welche die beweglichen Mittel zur Steuerung des Luftdurchsatzes in Abhängigkeit vom Bedarf (345, 475) der autonomen Stromversorgungsquelle an Kühlung ansteuern,
**dadurch gekennzeichnet, dass** sie eine lösbare Ventilationsvorrichtung (375, 500, 50) umfasst, die den Einlass (305, 405) für Luft (310, 410) versorgt, und dadurch, dass die Mittel (350, 475) zur Überwachung des Luftfahrzeugs dafür ausgelegt sind, den Luftdurchsatz der lösbaren Ventilationsvorrichtung (375, 500, 50) zu steuern.

2. Vorrichtung (30, 40) nach Anspruch 1, wobei der Bedarf (345, 470) der autonomen Stromversorgungsquelle (315, 465) an Kühlung durch ein Batteriemanagementsystem oder BMS an die Mittel (350, 475) zur Überwachung übertragen wird.

3. Vorrichtung (40) nach einem der Ansprüche 1 oder 2, welche außerdem den Kühlkreislauf, einen Wärmetauscher (415), einen Behälter (445) für das Fluid (440) und eine Pumpe (455) umfasst und in welcher das Fluid (440) eine Flüssigkeit ist.

4. Vorrichtung (30, 40) nach einem der Ansprüche 1 bis 3, welche Mittel (365, 490) zur Befestigung der lösbaren Ventilationsvorrichtung (375, 500) an dem Luftfahrzeug (80) umfasst.

5. Luftfahrzeug (80), **dadurch gekennzeichnet, dass** es eine Vorrichtung (30, 40) nach einem der Ansprüche 1 bis 4 umfasst.

6. Luftfahrzeug, welches wenigstens eine Tragfläche und eine Vorrichtung (30, 40) nach einem der Ansprüche 1 bis 4, welche unter der Tragfläche des Luftfahrzeugs (80) angebracht ist, umfasst.

7. Verfahren (60) zur Kühlung mindestens einer autonomen Stromversorgungsquelle (315, 475) eines Luftfahrzeugs (80), welches eine Vorrichtung (30, 40) nach einem der Ansprüche 1 bis 4 umfasst, **dadurch gekennzeichnet, dass** es die folgenden Schritte umfasst:
- Einlassen (63) von Luft (310, 410) über den Lufteinlass (305, 405).
- Leiten (64) von Luft oder des Kühlfluids zu der mindestens einen autonomen Stromversorgungsquelle des Luftfahrzeugs,
- Zusammenlaufen (65) von Heißluft (320, 420) am Auslass,
- Berechnen (66) des Bedarfs (345, 470) der autonomen Stromversorgungsquelle an Kühlung durch Mittel (350, 475) zur Überwachung des Luftfahrzeugs, und
- Ansteuern (68) der beweglichen Mittel (325, 425) zur Steuerung des Luftdurchsatzes.

8. Verfahren (60) zur Kühlung nach Anspruch 7, welches außerdem die folgenden Schritte umfasst:
- Befestigung (61) der lösbaren Ventilationsvorrichtung (375, 500, 50) am Luftfahrzeug (80),
- Versorgung (62) der lösbaren Ventilationsvorrichtung mit elektrischem Strom, und
- Steuerung (67) des Luftdurchsatzes (310, 410) der Ventilationsvorrichtung.

## Claims

1. Device (30, 40) for cooling at least one autonomous electric power source (315, 465) of an aircraft (80) comprising:
- said at least one autonomous electric power source (315, 465) of an aircraft,
- an inlet (305, 405) for air (310, 410), conveying the air arriving through the air inlet to said at least one autonomous electric power source (315, 465) of an aircraft; or an air inlet and a cooling circuit comprising a coolant, the air inlet allowing the air to cool said coolant, which is conveyed to said at least one electric power source of an aircraft,
- a convergent outlet (330, 430) for hot air (320, 420) comprising mobile means (325, 425) for controlling the air flow rate and
- supervision means (350, 475) of the aircraft driving the mobile means for controlling the air flow rate according to the cooling needs (345, 475) of the autonomous electric power source,
**characterized in that** it comprises a removable ventilation device (375, 500, 50) supplying the inlet (305, 405) for air (310, 410) and **in that** the supervision means (350, 475) of the aircraft are configured to control the air flow of the removable ventilation device (375, 500, 50).

2. Device (30, 40) according to Claim 1, wherein the cooling needs (345, 470) of the autonomous electric power source (315, 465) are transmitted to the supervision means (350, 475) by a battery management system or BMS.

3. Device (40) according to one of Claims 1 and 2, which comprises, in addition to the cooling circuit, a heat exchanger (415), a tank (445) of said fluid (440) and a pump (455) and wherein the fluid (440) is a liquid.

4. Device (30, 40) according to one of Claims 1 to 3 which comprises means (365, 490) for fixing the removable ventilation device (375, 500) to the aircraft (80).

5. Aircraft (80), **characterized in that** it comprises a device (30, 40) according to one of Claims 1 to 4.

6. Aircraft comprising at least one wing and device (30, 40) according to one of Claims 1 to 4 which is put in place under the wing of the aircraft (80).

7. Method (60) for cooling at least one autonomous electric power source (315, 475) of an aircraft (80) comprising a device (30, 40) according to one of Claims 1 to 4,
**characterized in that** it comprises the following steps:
- intake (63) of air (310, 410) through the air inlet (305, 405),
- conveying (64) of air or of the coolant to the at least one autonomous electric power source of the aircraft,
- convergence (65) of hot air (320, 420) at the outlet,
- computation (66) of the cooling needs (345, 470) of the autonomous electric power source by the supervision means (350, 475) of the aircraft, and
- driving (68) of the mobile means (325, 425) for controlling the air flow rate.

8. Cooling method (60) according to Claim 7, which comprises, in addition, the following steps:
- fixing (61) of the removable ventilation device (375, 500, 50) to the aircraft (80),
- supplying (62) of electric current to the removable ventilation device, and
- controlling (67) of the air flow rate (310, 410) of the ventilation device.
